# EUROPEAN PATENT SPECIFICATION

(11) **EP 2 215 169 B1**
(45) Date of publication and mention of the grant of the patent: **01.06.2016**
(21) Application number: 07845133.3
(22) Date of filing: 21.11.2007
(51) Int. Cl.: C09D 9/04, C11D 3/20

(54) **FLOOR STRIPPER FOR CHEMICALLY-RESISTANT CROSSLINKED FLOOR FINISHES**
FUSSBODENABZIEHMITTEL FÜR CHEMISCH RESISTENT VERNETZTE FUSSBODENLACKE
DÉCAPANT POUR SOLS POUR ENDUITS DE SOL RÉTICULÉS RÉSISTANTS AUX PRODUITS CHIMIQUES

(43) Date of publication of application: 11.08.2010
(73) Proprietor: ECOLAB INC., St. Paul, MN 55102 (US)
(72) Inventor: KRIENS, Nicola, 46539 Dinslaken (DE); LIKO, Christian, 45768 Marl (DE); MENZEL, Matthias, 40764 Langenfeld (DE)
(74) Representative: Godemeyer Blum Lenze Patentanwälte Partnerschaft mbB - werkpatent
(86) International application number: PCT/US2007/085437
(87) International publication number: WO 2009/067120

(56) References cited:
- US-A- 5 977 042
- US-A1- 2007 087 952
- US-A1- 2007 095 003

## Description

### Technical Field

This invention relates to floor stripping and to the non-destructive removal of floor finishes.

### Background

Traditional floor finishes are mainly based on acrylate polymers with readily-disruptable crosslinking sites which may be removed for refinishing using an appropriate floor stripping agent. For example, acrylate floor finish polymers often employ metal ion crosslinking and are removed using alkaline strippers. For applications where the finish requires increased chemical resistance (e.g., hospitals and other locations where rubbing alcohol and other finish-discoloring solvents may be spilled), less readily disruptable cross-linking agents such as aziridines may be employed. This however can make it very difficult to remove the old finish when refinishing is desired. Finishes having especially high chemical resistance may have to be removed using mechanical means such as sanding. This can damage the underlying flooring substrate. Some underlying flooring substrates are also susceptible to damage from the chemicals employed in aggressive floor strippers. For example, linoleum may turn brown under high pH conditions.

References relating to floor strippers include U.S. Patent Nos. 5,342,551 (Ruckle), 5,419,848 (Van Eenam '848), 5,637,559 (Koreltz et al.), 5,804,541 (Jans), 5,849,682 (VanEenam '682), 5,977,042 (Hernandez et al.) and 6,544,942 B1 (Smith et al.), 6,583,101 B1 (Wiseth et al.), U.S. Patent Application Publication Nos. US 2002/0028621 A1 (Levitt et al.), US 2003/0125226 A1 (Lewis), US 2006/0234890 A1 (Griese et al.), US 2007/0087952 A1 (Hei et al. '952), US 2007/0095003 A1 (Hei et al. '003) and Published PCT Application No. WO 2004/090085 A1 (Vocfree, Inc.).

There is an unmet need for floor strippers that can safely remove chemically-resistant crosslinked floor finishes, especially on flooring substrates that are susceptible to chemical attack.

### Summary of the Invention

The present invention provides, in one aspect, a floor finish stripper composition comprising:
a) phenyl-substituted alkyl alcohol;
b) oxygenated swelling solvent other than the phenyl-substituted alkyl alcohol;
c) water;
d) sufficient coupler so that the composition has a single phase; and
e) sufficient saponification agent comprising the reaction product of a fatty acid or fatty ester with a stoichiometric excess of an alkali metal hydroxide or ammonium hydroxide so that the composition has an alkaline pH and has a reduced oily residue after stripping when compared to an otherwise similar composition that does not contain the saponification agent.

The invention provides in another aspect a method for stripping or deep scrubbing a hardened floor finish on a floor comprising:
a) applying to the floor finish a composition comprising phenyl-substituted alkyl alcohol, oxygenated swelling solvent other than the phenyl-substituted alkyl alcohol, water, sufficient coupler so that the composition has a single phase, and sufficient saponification agent comprising the reaction product of a fatty acid or fatty ester with a stoichiometric excess of an alkali metal hydroxide or ammonium hydroxide so that the composition has an alkaline pH and has a reduced oily residue after stripping when compared to an otherwise similar composition that does not contain the saponification agent;
b) allowing the applied composition to soften at least some of the floor finish; and
c) removing the composition and softened floor finish from the floor.

The disclosed compositions and methods have particular utility for stripping or deep scrubbing chemically-resistant crosslinked floor finishes.

### Detailed Description

The phrase "hardenable floor finish" refers to an applied liquid coating that through a chemical or physical process (including solvent evaporation or other drying processes, photochemical reactions, electrochemical reactions, radical processes, thermal processes, ionic processes, moisture cure processes or multiple-component (e.g., two- or three-component) crosslinking processes) can become dried, crosslinked or otherwise cured *in situ* to form a tack-free film on a floor. The phrase "hardened floor finish" refers to such a dried, crosslinked or otherwise cured finish. The phrase "chemically-resistant crosslinked floor finish" refers to a hardened floor finish which has crosslinked during hardening to provide a finish that does not dissolve or discolor when temporarily coated with disinfection detergents containing e.g., isopropyl or ethyl alcohol.

The term "stripping" when used with respect to a floor finish refers to removing, at such time as it may be desired to do so, substantially all of a hardened floor finish from an underlying installed flooring substrate without removing substantial portions of the flooring substrate. Such stripping preferably employs minimally abrasive measures such as mop or spray application of the disclosed stripper, a brief standing time and rinsing using, e.g., water or a detergent solution. Stripping may if desired be accompanied by more abrasive but flooring-safe measures such as abrading the finish during the standing time using e.g., a commercial rotary floor machine (sometimes also called a "single disc machine" or a "swing machine") equipped with nonwoven or brush floor scrub pads. Stripping desirably is carried out without requiring flooring-damaging finish removal steps such as sanding. The phrase "deep scrubbing" when used with respect to a floor finish refers to removing, at such time as it may be desired to do so, an uppermost portion of a multilayer hardened floor finish without removing all of the layers in such finish. The term "recoating" when used with respect to a floor finish refers to stripping or deep scrubbing, at such time as it may be desired to do so, a worn or otherwise degraded hardened floor finish atop an underlying installed flooring substrate, and applying and hardening an additional layer or layers of hardenable floor finish to provide a fresh hardened floor finish surface.

The phrase "swelling solvent" when used with respect to a floor stripper composition refers to an organic liquid that can swell or otherwise be absorbed by a hardened floor finish on an installed floor.

The phrase "sparingly water-soluble" refers to a material whose solubility limit by itself in water at room temperature and pressure is less than about 10 wt. % and which in the presence of a sufficient amount of a suitable coupler can form a clear, homogenous water solution at a level above such solubility limit.

The term "concentrate" when used with respect to a floor stripper composition refers to a composition intended to be diluted with water before use. The phrase "ready to use" when used with respect to a floor stripper composition refers to a composition that may be used without such dilution.

The phrase "substantially nonchlorinated" when used with respect to a floor stripper composition refers to a composition that does not contain objectionable quantities of chlorinated solvents (e.g., methylene chloride) whose presence might pose a health or environmental hazard.

A variety of phenyl-substituted alkyl alcohols may be employed in the disclosed compositions and methods. The phenyl-substituted alkyl alcohol desirably has a flash point greater than about 60° C, low odor and low toxicity, and preferably has at least 0.1 wt. % water solubility. Representative phenyl-substituted alkyl alcohols include benzyl alcohol (~4% water solubility); terpineols (e.g., alpha, beta, gamma, etc.; slight water solubility); ethylene glycol monobenzyl ether (water soluble); alpha-phenylethyl alcohol (<0.1% water solubility), beta-phenylethyl alcohol (4% water solubility), ethylene glycol phenyl ether (~2% water solubility, commercially available as DOWANOL™ EPh™ from Dow Chemical Co.), propylene glycol phenyl ether (∼1% water solubility, commercially available as DOWANOL PPh™ from Dow Chemical Co.) and mixtures thereof. Benzyl alcohol, ethylene glycol phenyl ether and propylene glycol phenyl ether are preferred phenyl-substituted alkyl alcohols. The phenyl-substituted alkyl alcohol may for example represent at least 1 wt. %, at least 5 wt. %, at least 10 wt. %, at least 15 wt. %, at least 20 wt. % or at least 25 wt. % of the total stripper composition. The phenyl-substituted alkyl alcohol may for example also represent less than 50 wt. %, less than 40 wt. %, less than 30 wt. %, less than 20 wt. % or less than 15 wt. % of the total stripper composition. The appropriate amount will typically vary somewhat depending on the chosen phenyl-substituted alkyl alcohol, other ingredients in the stripper composition, and the characteristics of the floor finish whose stripping or deep scrubbing is desired. When a sparingly water-soluble phenyl-substituted alkyl alcohol is employed, the phenyl-substituted alkyl alcohol amount may be less than or more preferably greater than the normal solubility limit in the absence of a coupler. A preferred phenyl-substituted alkyl alcohol amount is greater than 5 wt. % and less than 30 wt. %, and more preferably greater than 10 wt. % and less than 20 wt. % of the total stripper composition.

A variety of oxygenated swelling solvents may be employed in the disclosed compositions and methods. The oxygenated swelling solvent is different from the chosen phenyl-substituted alkyl alcohol, desirably has a flash point greater than about 60° C, low odor and low toxicity, and preferably has at least 0.1 wt. % water solubility. Representative oxygenated swelling solvents include alcohols, ethers, esters, aliphatic acids or anhydrides, and ketones, including 2-, 3- or 4-acetamidophenol (<1.4% water solubility); acetanilide (<1% water solubility); acetophenone (<1% water solubility); 2-acetyl-1-methylpyrrole; benzyl acetate (<1% water solubility); benzyl benzoate (<1% water solubility); oxygenated essential oils (e.g., benzaldehyde, carvone, cinnamaldehyde, borneol and its esters, citrals, linalool and its esters); dibasic esters such as dimethyl adipate, dimethyl succinate, dimethyl glutarate (often available in a mixture, including products available under the trade designations DBE™, DBE-3, DBE-4, DBE-5, DBE-6, DBE-9, DBE-IB, and DBE-ME from DuPont Nylon), dimethyl malonate, diethyl adipate, diethyl succinate, diethyl glutarate, dibutyl succinate, and dibutyl glutarate; dialkyl carbonates such as dimethyl carbonate, diethyl carbonate, dipropyl carbonate, diisopropyl carbonate, and dibutyl carbonate; C1-12 aliphatic acids such as acetic or succinic acid; C1-12 aliphatic anhydrides such as acetic anhydride or succinic anhydride; organo-phosphates and phosphonates such as tributyl phosphate, tripropyl phosphate, 2-ethyl-1-hexyl phosphate; phthalate esters such as dibutyl phthalate, diethylhexyl phthalate, and diethyl phthalate; pyrrolidinones such as 1-methyl-2-pyrrolidinone (NMP) and 1-ethyl-2-pyrrolidinone (NEP); and mixtures thereof. Additional representative oxygenated solvents include amyl acetate, amyl alcohol, butanol, 3-butoxyethyl-2-propanol, butyl acetate, n-butyl propionate, cyclohexanone, diacetone alcohol, diethoxyethanol, diethylene glycol methyl ether, diisobutyl carbinol, diisobutyl ketone, dimethyl heptanol, dipropylene glycol tert-butyl ether, ethanol, ethyl acetate, 2-ethylhexanol, ethyl propionate, ethylene glycol methyl ether acetate, hexanol, isobutanol, isobutyl acetate, isobutyl heptyl ketone, isophorone, isopropanol, isopropyl acetate, methanol, methyl amyl alcohol, methyl n-amyl ketone, 2-methyl-1-butanol, methyl ethyl ketone, methyl isobutyl ketone, 1-pentanol, n-pentyl propionate, 1-propanol, n-propyl acetate, n-propyl propionate, propylene glycol ethyl ether, tripropylene glycol methyl ether (commercially available as DOWANOL TPM from Dow Chemical Co.), dipropylene glycol dimethyl ether (commercially available as PROGLYDE™ DMM from Dow Chemical Co.), tripropylene glycol n-butyl ether (commercially available as DOWANOL TPNB from Dow Chemical Co.), diethylene glycol n-butyl ether acetate (commercially available as Butyl CARBITOL™ acetate from Dow Chemical Co.), diethylene glycol monobutyl ether (commercially available as Butyl CARBITOL from Dow Chemical Co.), ethylene glycol n-butyl ether acetate (commercially available as Butyl CELLOSOLVE™ acetate from Dow Chemical Co.), ethylene glycol monobutyl ether (commercially available as Butyl CELLOSOLVE from Dow Chemical Co.), dipropylene glycol monobutyl ether (commercially available as Butyl DIPROPASOL™ from Dow Chemical Co.), propylene glycol monobutyl ether (commercially available as DOWANOL PnB from Dow Chemical Co.), ethyl 3-ethoxypropionate (commercially available as UCAR™ Ester EEP from Dow Chemical Co.), 2,2,4-trimethyl-1,3-pentanediol monoisobutyrate (commercially available as UCAR FILMER™ IBT from Dow Chemical Co.), diethylene glycol monohexyl ether (commercially available as Hexyl CARBITOL from Dow Chemical Co.), ethylene glycol monohexyl ether (commercially available as Hexyl CELLOSOLVE from Dow Chemical Co.), diethylene glycol monomethyl ether (commercially available as Methyl CARBITOL from Dow Chemical Co.), diethylene glycol monoethyl ether (commercially available as CARBITOL from Dow Chemical Co.), ethylene glycol methyl ether acetate (commercially available as Methyl CELLOSOLVE acetate from Dow Chemical Co.), ethylene glycol monomethyl ether (commercially available as Methyl CELLOSOLVE from Dow Chemical Co.), dipropylene glycol monomethyl ether (commercially available as Methyl DIPROPASOL from Dow Chemical Co.), propylene glycol methyl ether acetate (commercially available as Methyl PROPASOL acetate from Dow Chemical Co.), propylene glycol monomethyl ether (commercially available as Methyl PROPASOL from Dow Chemical Co.), diethylene glycol monopropyl ether (commercially available as Propyl CARBITOL from Dow Chemical Co.), ethylene glycol monopropyl ether (commercially available as Propyl CELLOSOLVE from Dow Chemical Co.), dipropylene glycol monopropyl ether (commercially available as Propyl DIPROPASOL from Dow Chemical Co.) and propylene glycol monopropyl ether (commercially available as Propyl PROPASOL from Dow Chemical Co.) and mixtures thereof. Preferred oxygenated swelling solvents include propylene glycol monobutyl ether, dipropylene glycol dimethyl ether, ethylene glycol monobutyl ether, diethylene glycol monobutyl ether, NMP, NEP and mixtures thereof. Some oxygenated swelling solvents (e.g., NMP or NEP) may provide a synergistic improvement in stripping performance when combined with phenyl-substituted alkyl alcohols such as benzyl alcohol. If desired, minor amounts of low flash point oxygenated swelling solvents such as 1,3-dioxolanehose (flash point about -6° C), ethanol (flash point 12° C), isopropanol (flash point 12° C) and other solvents that will be known by persons having ordinary skill in the art may be included together with major amounts of a higher flash point oxygenated swelling solvent, to provide a composition with more acceptable flammability characteristics than one containing only the low flash point solvent. The oxygenated swelling solvents may for example represent at least 1 wt. %, at least 4 wt. %, at least 10 wt. %, at least 15 wt. % or at least 20 wt. % of the total stripper composition. The oxygenated swelling solvent may for example also represent less than 40 wt. %, less than 30 wt. %, less than 20 wt. %, less than 15 wt. %, less than 10 wt. % or less than 5 wt. % of the total stripper composition. The appropriate amount will typically vary somewhat depending on the chosen oxygenated swelling solvent, other ingredients in the stripper composition, and the characteristics of the floor finish whose stripping or deep scrubbing is desired. When a sparingly water-soluble oxygenated swelling solvent is employed, the oxygenated swelling solvent amount may be less than or more preferably greater than the normal solubility limit in the absence of a coupler. A preferred oxygenated swelling solvent amount is greater than 1 and less than 10 wt. %, and more preferably greater than 4 and less than 10 wt. % of the total stripper composition.

Tap water, deionized water, distilled water or water in any other suitable form may be used in the disclosed compositions and methods. The use of softened water or of water having a low overall hardness level may facilitate application of the disclosed compositions to a hardened floor finish and limit dewetting. Water may represent for example at least 5 wt. %, at least 10 wt. %, at least 20 wt. %, at least 25 wt. %, at least 30 wt. %, at least 40 wt. %, at least 50 wt. % or at least 60 wt. % of the total stripper composition. Water may for example also represent less than 80 wt. %, less than 70 wt. %. less than 60 wt. %, less than 55 wt. %, less than 50 wt. %, less than 40 wt. %, less than 30 wt. % or less than 20 wt. % of the total stripper composition. The appropriate amount will typically vary somewhat depending on the other ingredients in the stripper composition and the characteristics of the floor finish whose stripping or deep scrubbing is desired. The composition may be sold in ready to use form, or if desired may be sold as a water-containing concentrate designed to be diluted with additional water, e.g., where deep scrubbing rather than stripping is desired. A preferred water amount for use in ready to use compositions is about 10 to about 70 wt. %, and more preferably about 20 to about 60 wt. % of the total stripper composition

A variety of couplers may be employed in the disclosed compositions and methods. The coupler desirably serves as a hydrotrope for one or more hydrophobic ingredients in the stripper composition, may contain carbon atoms, (e.g., from about 2 to about 11 carbon atoms) or heteroatoms (e.g., nitrogen or sulfur), and may be substituted with various moieties (e.g., hydroxyl, ester, aldehyde or alkyl groups), so long as such carbon atoms, heteroatoms and moieties do not prevent the composition from attaining a single phase and do not cause excessive foaming when employing the chosen application equipment. It may be noted in that regard that less foaming may occur and more latitude in coupler selection may be available when using a mop, sponge or other simple application device. Also, more foaming may occur and less latitude in coupler selection may be available when using a rotary floor machine or other motorized application device. Representative couplers include various aromatic acids, water-soluble alkali metal salts of aromatic acids, water-soluble organic amines, water-soluble salts of such amines, and mixtures thereof. Many such couplers are available, including sodium cumene sulfonate, potassium cumene sulfonate, hydroxyethane sulfonic acid, toluene sulfonic acid, xylene sulfonic acid, methyl naphthalene sulfonic acid, 1-hydroxyethylidene-1,1-diphosphonic acid, n-butyl acid phosphate, phenyl acid phosphate, dimethylpyrophosphoric acid, 2-phosphonobutane-1,2,4-tricarboxylic acid, benzoic acid, hydroxybenzoic acids (e.g., 2-hydroxybenzoic acid), dihydroxybenzoic acids (e.g., 3,5-dihydroxybenzoic acid), pyridinecarboxylic acids (e.g., 2-pyridinecarboxylic acid). pyridinedicarboxylic acids (e.g., 2,6-pyridinedicarboxylic acid), sulfosuccinic acid, monoethanolamine (MEA), 2-aminomethylpropanol (AMPS), reaction products formed by combining an acid such as cumene sulfonic acid and an amine such as MEA, amino tri (methylene phosphonic acid) and mixtures thereof. The coupler may have any suitable purity level. Preferably however a coupler of at least 30 % purity is employed. Sufficient coupler should be employed so that the composition has a single phase. Thus the desired coupler amount will vary somewhat depending upon the water solubility of the chosen phenyl-substituted alkyl alcohol and oxygenated swelling solvent. Normally however at least one and in some instances both of the phenyl-substituted alkyl alcohol and oxygenated swelling solvent will be present in amounts above their water solubility limits in the absence of a coupler, and thus the coupler will be needed to provide a single phase stripper composition. When the disclosed compositions are formulated as a concentrate, the coupler may represent for example about 0.1 to about 20 wt. %, about 1 to about 10 wt. % or about 3 to about 8 wt. % of the total concentrate weight.

A variety of saponification agents may be employed in the disclosed compositions and methods. The saponification agent comprises the reaction product of a fatty acid or fatty ester with a stoichiometric excess (based on the equivalents of acid groups or ester linkages compared to the equivalents of hydroxide) of an alkali metal hydroxide or ammonium hydroxide. The fatty acid or fatty ester and the saponification agent made therefrom desirably have a low or at least not unpleasant odor. A variety of fatty acids or fatty esters may be employed. The fatty acid or fatty ester may for example be saturated or unsaturated and may be naturally-occurring or artificially produced. The fatty acid or fatty ester may contain for example from about 2 to about 34 aliphatic carbon atoms, with the caveat however that odiferous acids or esters such as butyric acid and caproic acid are contraindicated. Representative saturated fatty acids include acetic acid, caprylic acid, capric acid, lauric acid, myristic acid, palmitic acid, stearic acid, arachidic acid, behenic acid and mixtures thereof. Representative unsaturated fatty acids include myristoleic acid, palmitoleic acid, oleic acid, linoleic acid, alpha-linolenic acid, arachidonic acid, eicosapentaenoic acid, erucic acid, docosahexaenoic acid and mixtures thereof (e.g., coconut fatty acid). Representative fatty esters include non-odiferous alkyl esters of the fatty acids mentioned above. The fatty acid or fatty ester may for example represent at least 1 wt. %, at least 3 wt. %, at least 5 wt. %, at least 6 wt. %, at least 7 wt. % or at least 9 wt. % of the total stripper composition. The fatty acid or fatty ester may for example also represent less than 30 wt. %, less than 20 wt. %, less than 15 wt. % or less than 10 wt. % of the total stripper composition. The appropriate amount will typically vary somewhat depending on the chosen phenyl-substituted alkyl alcohol and other ingredients in the stripper composition. A preferred fatty acid or fatty ester amount is greater than 5 and less than 25 wt. %, and more preferably greater than 6 and less than 20 wt. % of the total stripper composition.

A variety of hydroxide compounds may be combined with the fatty acid or fatty ester to form the saponification agent. Representative hydroxide compounds include lithium hydroxide, sodium hydroxide, potassium hydroxide and ammonium hydroxide, with sodium hydroxide and ammonium hydroxide being preferred. The amount of hydroxide compound may be determined based on the number of fatty acid or fatty ester acid equivalents employed. Sufficient excess hydroxide compound should be employed so that the stripper composition will have an alkaline pH, e.g., a pH value greater than 7 and preferably less than or equal to 11. Stripper compositions with pH values greater than 10 may stain linoleum. A preferred pH for the stripper composition is from about 8 to about 11, from about 8 to about 10, from about 9 to about 11 or from about 9 to about 10.

Sufficient saponification agent is used so that the stripper composition has a reduced oily residue after stripping when compared to an otherwise similar composition that does not contain the saponification agent. Preferably the stripper composition leaves at most a slightly oily residue after stripping (as evaluated by wiping a hand or cloth across the stripped surface) and more preferably the stripper composition does not leave an oily residue after stripping. The saponification agent may for example represent at least 2 wt. %, at least 3 wt. %, at least 5 wt. %, at least 8 wt. %, at least 10 wt. % or at least 15 wt. % of the total stripper composition. The saponification agent may for example also represent less than 30 wt. %, less than 25 wt. %, less than 20 wt. %, less than 15 wt. % or less than 10 wt. % of the total stripper composition. The appropriate amount will typically vary somewhat depending on the chosen phenyl-substituted alkyl alcohol and other ingredients in the stripper composition. A preferred saponification agent amount is greater than 5 and less than 30 wt. %, and more preferably greater than 10 and less than 20 wt. % of the total stripper composition.

The disclosed compositions may also contain one or more surfactants. Representative surfactants will be familiar to those skilled in the art, and include anionic, cationic, amphoteric and nonionic surfactants, and mixtures thereof. Exemplary surfactants include fatty alcohols (e.g., saturated or unsaturated C₄₋₃₄ fatty alcohols) and the surfactants described in U.S. Patent No. 6,544,942 B1. The amount of surfactant may vary depending on factors such as the types and amounts of other ingredients in the disclosed composition, the desired dilution level, and other factors that will be familiar to those skilled in the art. As a general guide, the amount of surfactant may be about 0.1 to about 20 wt. %, about 1 to about 15 wt. %, about 1 to about 10 wt. % or about 1 to about 5 wt. % of the total stripper composition.

The disclosed compositions may also contain one or more thickening agents. A thickening agent can help the composition stay in place after being applied, by reducing the tendency for the stripper composition to flow into undesired areas outside the area to be stripped (e.g., carpeting, flooring not being stripped, or areas under store displays and shelving), and by reducing the tendency for the stripper composition to flow from high spots to low spots within the area to be stripped. A variety of thickening agents can be employed. Preferred thickening agents do not unduly impede light transmission through the stripper composition, and provide a composition that will be transparent when applied to a flooring substrate. Representative thickening agents include polyacrylic acid copolymers including alkali-swellable or alkali soluble emulsions (ASE thickeners) and hydrophobically-modified ASE thickeners (HASE thickeners); urethane copolymers including hydrophobically modified, ethoxylated urethane resins (HEUR thickeners); cellulose ethers such hydroxypropyl cellulose, ethyl cellulose, ethyl hydroxyethyl cellulose, methyl cellulose and other alkyl or hydroxy alkyl cellulose ethers; silica including colloidal silica; clays such as bentonite and montmorillonite; starch; alumina including colloidal alumina; gum arabic; tragacanth; agar; sugar derivatives; high molecular weight polyethylene oxides; guar gum; xanthan gum; polyvinyl pyrrolidone; methyl vinyl ether/maleic anhydride copolymers and other thickeners or thickening systems described in U.S. Patent Nos. 5,364,551 (Lentsch et al.), 5,419,848 (VanEenam '848), 5,696,072 (Nercissiantz et al.), 6,010,995 (Van Eenam '995), 6,586,380 B2 (Marquis et al.), 6,630,434 B2 (Besse et al.) and 6,833,341 (Machac, Jr. et al.). The thickener amount may vary depending on the desired storage, dispensing and post-application viscosities and desired rheological behavior. Exemplary commercially-available thickeners include WOKAMER™ C 3301 polyacrylic acid copolymer from Kahl & Co. and SYNTRAN™ 1501 aqueous acrylic copolymer from Interpolymer Corp. A preferred thickener amount is about 1 to about 10 wt. % of the total stripper composition.

The disclosed compositions may inorganic particles (e.g., abrasive particles). A representative list of inorganic particles is shown in U. S. Patent No. 6,800,353 B1 (Anderson et al.). Silica or organosilica inorganic particles with average particle diameters of about 0.005 to about 0.1 micrometers are preferred. A preferred inorganic particle amount is about 5 to about 20 wt. % of the total stripper composition.

The disclosed compositions may contain other adjuvants including biocides, chelants, builders, defoamers, fragrances, dyes, indicators, colorants, anticorrosion additives, antirust additives, light stabilizers and antioxidants. The types and amounts of such adjuvants will be familiar to those skilled in the art.

Set out below in table 1 are several suggested formulations and suggested ranges for their various ingredients:

**Table 1**

| | **1** | **2** | **3** | **4** |
|---|---|---|---|---|
| **Ingredient** | **Amount, %** | **Amount, %** | **Amount, %** | **Amount, %** |
| Deionized water | 25-70 | 20-60 | 20-50 | 40-80 |
| Ethanol | 1-5 | 1-5 | 1-5 | 1-5 |
| Benzyl alcohol | 5-20 | 1-15 | 10-30 | 5-20 |
| fatty acid | 1-5 | 3-15 | 3-15 | 1-5 |
| Sodium hydroxide, 50 % | 1-5 | 5-10 | 5-10 | 1-5 |
| fatty alcohol | 1-5 | 5-10 | 10-15 | 1-5 |
| Propylene glycol monobutyl ether | 5-10 | 8-15 | 10-20 | 5-10 |
| Polyacrylic acid copolymer thickener | 1-5 | 3-10 | 3-10 | 1-5 |
| Sodium cumene sulfonate, 40% | 5-15 | 10-20 | 5-15 | 1-10 |
| Abrasive nanoparticles | | | | 5-20 |

The disclosed compositions may be packaged in any convenient form including bottles, drums, dispensers intended to be carried by a user during stripper/cleaner application and dispensers intended to be replaceably installed in a mixing or dispensing device (e.g., a wall-mounted, freestanding or benchtop dispensing station). The types and design of suitable packaging will be familiar to those skilled in the art.

A variety of flooring substrates may be stripped using the disclosed method. Exemplary flooring substrates include resilient flooring substrates such as vinyl composition tiles, vinyl flooring (including PVC flooring), linoleum, rubber sheeting, rubber tile, cork and synthetic sports flooring, and non-resilient flooring substrates such as terrazzo, concrete, stone, marble, slate, ceramic tile, grout, and dry shake flooring. Such flooring substrates may be installed at a variety of jobsites, including indoor and outdoor sites involving new or existing residential, commercial and government- or agency-owned sites.

A variety of hardened floor finishes may be stripped or deep scrubbed using the disclosed method. Representative commercially available floor finishes include PADLOCK™, GEMSTAR LASER™, GEMSTAR POLARIS™, RIVET™, and TAJ MAHAL™ acrylic floor finishes, GLOSSTEK 100™ and ORION™ polyurethane floor finishes and COURTMASTER II™, ISI STAR™, TUKLAR MEDICAL™, and LODAN STAR™ finishes, all from Ecolab Inc.; CORNERSTONE™ and TOPLINE™ acrylic floor finishes from 3M; BETCO BEST™ floor finish from Betco Corp.; HIGH NOON™ acrylic finish from Butchers; CITATION™ and CASTLEGUARD™ acrylic finishes from Buckeye International, Inc.; THERMOHOSPITAL™ polish from Johannes Kiel KG; COMPLETE™, SIGNATURE™, TECHNIQUE™ and VECTRA™ acrylic floor finishes and OVER AND UNDER™ floor sealer from S. C. Johnson Professional Products; the TASKI JONTEC line of finishes (including ESD™, ETERNUM™, LINOS AFE™, LUNA™, MATT™, RESITOL™, TIMESAVER™ and TRAFFIC™ finishes) from JohnsonDiversey Inc.; SPLENDOR™, DECADE 90™, PRIME SHINE™ ULTRA and PREMIER™ acrylic finishes and FIRST ROUND and FORTRESS™ urethane acrylic finishes from Minuteman, International, Inc.; ACRYL-KOTE™ Seal and Finish and PREP Floor Seal from Minuteman, International, Inc.; ULTRA TC™ and UVI-FINISH™ UV-curable finishes from Minuteman, International, Inc; ON TOP™ hard floor coating from Dr. Schnell Chemie GmbH; FLOORSTAR™ Premium 25 floor finish from ServiceMaster, Inc.; UPPER LIMITS™ acrylic finish and ISHINE™ optically brightened floor finish from Spartan Chemical Co. and LONGLIFE HOSPITAL™ finish from Tana-Chemie GmbH. The disclosed compositions have particular utility for stripping or cleaning chemically-resistant crosslinked floor finishes such as the above-mentioned TUKLAR MEDICAL finish which is crosslinked using an aziridine, and is not normally removable using conventional strippers.

If in concentrated form, the stripper/cleaner should be diluted with water prior to use, e.g., at an intended use location. Ordinary tap water, softened water or process water may be employed. The concentrate:water dilution ratio usually will be at least 1:1 by volume, for example at least 1:2, at least 1:3, at least 1:4, at least 1:5, at least 1:6, at least 1:8, at least 1:10 or more. A variety of mixing methods may be employed. Mixing in a mop bucket is one such method and may be preferred. The stripper/cleaner may be applied using techniques that will be familiar to those skilled in the art (e.g., using a flat or string mop, squeegee, roller or towel). The applied stripper/cleaner should be allowed to stand for a suitable time (e.g., for at least 10, at least 20 or at least 30 minutes, and if need be up to one hour, up to two hours or longer) while it softens or deep scrubs the floor finish. The floor finish and stripper/cleaner may optionally be abraded using a rotary floor machine equipped with a suitably mild abrasive (e.g., a green or black SCOTCH-BRITE™ Floor Maintenance pad from 3M) using overlapping passes and taking care to maintain a wet surface. The composition (and, where stripping is intended, the softened finish) may be removed using a variety of techniques that will be familiar to those skilled in the art including vacuuming, mopping, scrubbing, wiping or scraping. The stripped floor or deep scrubbed floor finish may be rinsed using at least one and preferably two or more applications of water, allowed to dry and a layer or layers of floor finish applied thereto and caused or allowed to harden. More than one application of floor finish and extra drying time between coats may be needed to ensure that porous portions of the underlying floor or floor finish are adequately filled.

The invention is further illustrated in the following non-limiting examples, in which all parts and percentages are by weight unless otherwise indicated.

### Example 1

A ready to use stripper formulation was made using the ingredients and amounts shown below in Table 2. The mixture formed a clear, single-phase solution.

**Table 2**

| **Ingredient** | **Amount, %** |
|---|---|
| Deionized water | 50.3 |
| Ethanol | 3.0 |
| Benzyl alcohol | 16.2 |
| C₁₂-C₁₈ fatty acid¹ | 9.0 |
| Sodium hydroxide, 50 % | 3.3 |
| C₁₀-C₁₄ EO(6) fatty alcohol² | 4.8 |
| Propylene glycol monobutyl ether³ | 6.0 |
| Polyacrylic acid copolymer thickener⁴ | 2.4 |
| Sodium cumene sulfonate, 40% | 5.0 |

| | |
|---|---|
| 1 EDENOR™ K 12-18 coconut fatty acid from Cognis. 2 DEHYDOL™ 980 ethoxylated fatty alcohol from Cognis. 3 DOWANOL PnB from Dow Chemical Co. 4 WOKAMER™ C 3301 from Kahl & Co. | |

The resulting stripper composition was used to strip a vinyl composite tile coated with three coats of aziridine-crosslinked TUKLAR MEDICAL floor finish (from Ecolab Inc.) which had been applied at a 30-50 m²/L (1,200-2,000 ft²/gallon) coating rate. The composition applied easily, and did not appear to dewet. The applied composition was allowed to stand for a 10 or 20 minute contact time, then scrubbed by hand or scrubbed using a rotary floor machine operated at 180 RPM and equipped with a green, brown or blue SCOTCH-BRITE™ abrasive pad (from 3M Co.), then rinsed twice with water. All coats of the finish were completely removed after either a 10 or 20 minute contact time. No oily residue remained after rinsing the tile.

### Example 2

A ready to use stripper formulation was made using the ingredients and amounts shown below in Table 3. The mixture formed a clear, single-phase solution.

**Table 3**

| **Ingredient** | **Amount, %** |
|---|---|
| Deionized water | 48.2 |
| C₁₂-C₁₈ fatty acid¹ | 5.0 |
| Sodium hydroxide, 50 % | 1.8 |
| Ethanol | 3.0 |
| Benzyl alcohol | 13.5 |
| C₁₀-C₁₄ EO(6) fatty alcohol² | 4.0 |
| Methylglycinediacetic acid, trisodium salt, 40%³ | 0.5 |
| Propylene glycol phenyl ether⁴ | 11.0 |
| Colloidal silica⁵ | 11.0 |
| Polyacrylic acid copolymer thickener⁶ | 2.0 |

| | |
|---|---|
| 1 EDENOR K 12-18 coconut fatty acid from Cognis. 2 DEHYDOL 980 ethoxylated fatty alcohol from Cognis. 3 TRILON M™ from BASF Aktiengesellschaft 4 DOWANOL PPh from Dow Chemical Co. 5 BINDZIL™ CC40 from Eka Chemicals. 6 WOKAMER C 3301 from Kahl & Co. | |

The resulting stripper composition was evaluated using the method of Example 1 and evaluated for wetting behavior and removability using the following subjective scales:

**Wetting Behavior**

| **Numerical Rating** | **Observed Behavior** |
|---|---|
| **2** | Excellent wetting |
| **1** | Less than 1% nonwetted area |
| **0** | 1% to less than 3% nonwetted area |
| **-1** | 3% to less than 10% nonwetted area |
| **-2** | 10% or more nonwetted area |

**Removability**

| **Numerical Rating** | **Observed Behavior** |
|---|---|
| **3** | Complete removal after single application |
| **2** | Complete removal after second application |
| **1** | About 95% removal after second application |
| **0** | About 90% removal after second application |
| **-1** | About 80% removal after second application |
| **-2** | About 70% removal after second application |
| **-3** | Less than 70% removal after second application |

The stripper composition exhibited excellent wetting behavior (a 2 rating) and provided complete finish removal after a single application (a 3 rating). Only a slightly oily residue remained on the stripped tiles. Removal of the sodium hydroxide and fatty acid would provide a stripper composition which would leave an objectionably oily residue after stripping. Such a residue could cause slip and fall injuries to persons walking on the stripped surface.

## Claims

1. A floor finish stripper composition comprising:
a) phenyl-substituted alkyl alcohol;
b) oxygenated swelling solvent other than the phenyl-substituted alkyl alcohol;
c) water;
d) sufficient coupler so that the composition has a single phase;
e) sufficient saponification agent comprising the reaction product of a fatty acid or fatty ester with a stoichiometric excess of an alkali metal hydroxide or ammonium hydroxide so that the composition has an alkaline pH and has a reduced oily residue after stripping when compared to an otherwise similar composition that does not contain the saponification agent.

2. A composition according to claim 1 wherein the phenyl-substituted alkyl alcohol comprises benzyl alcohol.

3. A composition according to claim 1 wherein the phenyl-substituted alkyl alcohol comprises ethylene glycol phenyl ether or propylene glycol phenyl ether or mixture thereof.

4. A composition according to claim 1 comprising greater than 5 wt. % and less than 25 wt. % phenyl-substituted alkyl alcohol.

5. A composition according to claim 1 wherein the oxygenated swelling solvent comprises propylene glycol monobutyl ether.

6. A composition according to claim 1 wherein the oxygenated swelling solvent comprises dipropylene glycol dimethyl ether, ethylene glycol monobutyl ether, diethylene glycol monobutyl ether, I-methyl-2-pyrrolidinone, I-ethyl-2-pyrrolidinone or mixture thereof.

7. A composition according to claim 1 comprising greater than 1 wt. % and less than 10 wt. % oxygenated swelling solvent.

8. A composition according to claim 1 wherein the saponification agent comprises the reaction product of a fatty acid with an alkali metal hydroxide or ammonium hydroxide.

9. A composition according to claim 1 wherein the saponification agent comprises the reaction product of a fatty ester with an alkali metal hydroxide or ammonium hydroxide.

10. A composition according to claim 1 made from sufficient alkali metal hydroxide or ammonium hydroxide so that the composition has a pH of 8 to 11.

11. A composition according to claim 1 made from sufficient alkali metal hydroxide or ammonium hydroxide so that the composition has a pH of 9 to 11.

12. A composition according to claim 1 further comprising 1 to 10 wt. % thickener and 1 to 10 wt. % surfactant.

13. A composition according to claim 1 that can remove an aziridine-crosslinked floor finish.

14. A composition according to claim 1 further comprising silica or organosilica inorganic particles with average particle diameters of 0.005 to 0.1 micrometers.

15. A method for stripping or deep scrubbing a crosslinked floor finish on a floor comprising:
a) applying to the crosslinked floor finish a composition according to claims 1 to 14;
b) allowing the applied composition to soften at least some of the floor finish; and
c) removing the composition and softened floor finish from the floor.

## Patentansprüche

1. Abziehmittelzusammensetzung für Fußbodenlacke, umfassend:
a) phenylsubstituierten Alkylalkohol;
b) sauerstoffhaltiges quellendes Lösungsmittel, welches ein anderes ist als der phenylsubstituierte Alkylalkohol;
c) Wasser;
d) ausreichend Koppler, sodass die Zusammensetzung eine einzelne Phase aufweist;
e) ausreichend Verseifungsmittel, umfassend das Reaktionsprodukt einer Fettsäure oder eines Fettsäureesters mit einem stöchiometrischen Überschuss an einem Alkalimetallhydroxid oder Ammoniumhydroxid, sodass die Zusammensetzung einen alkalischen pH-Wert aufweist und nach dem Abziehen einen verringerten öligen Rückstand aufweist im Vergleich zu einer ansonsten ähnlichen Zusammensetzung, welche das Verseifungsmittel nicht enthält.

2. Zusammensetzung nach Anspruch 1, wobei der phenylsubstituierte Alkylalkohol Benzylalkohol umfasst.

3. Zusammensetzung nach Anspruch 1, wobei der phenylsubstituierte Alkylalkohol Ethylenglycolphenylether oder Propylenglycolphenylether oder ein Gemisch davon umfasst.

4. Zusammensetzung nach Anspruch 1, umfassend mehr als 5 Gew.-% und weniger als 25 Gew.-% an phenylsubstituiertem Alkylalkohol.

5. Zusammensetzung nach Anspruch 1, wobei das sauerstoffhaltige quellende Lösungsmittel Propylenglycolmonobutylether umfasst.

6. Zusammensetzung nach Anspruch 1, wobei das sauerstoffhaltige quellende Lösungsmittel Dipropylenglycoldimethylether, Ethylenglycolmonobutylether, Diethylenglycolmonobutylether, 1-Methyl-2-pyrrolidon oder ein Gemisch davon umfasst.

7. Zusammensetzung nach Anspruch 1, umfassend mehr als 1 Gew.-% und weniger als 10 Gew.-% an sauerstoffhaltigem quellendem Lösungsmittel.

8. Zusammensetzung nach Anspruch 1, wobei das Verseifungsmittel das Reaktionsprodukt einer Fettsäure mit einem Alkalimetallhydroxid oder Ammoniumhydroxid umfasst.

9. Zusammensetzung nach Anspruch 1, wobei das Verseifungsmittel das Reaktionsprodukt eines Fettsäureesters mit einem Alkalimetallhydroxid oder Ammoniumhydroxid umfasst.

10. Zusammensetzung nach Anspruch 1, hergestellt aus ausreichend Alkalimetallhydroxid oder Ammoniumhydroxid, sodass die Zusammensetzung einen pH-Wert von 8 bis 11 aufweist.

11. Zusammensetzung nach Anspruch 1, hergestellt aus ausreichend Alkalimetallhydroxid oder Ammoniumhydroxid, sodass die Zusammensetzung einen pH-Wert von 9 bis 11 aufweist.

12. Zusammensetzung nach Anspruch 1, ferner umfassend 1 bis 10 Gew.% an Verdickungsmittel und 1 bis 10 Gew.-% an Tensid.

13. Zusammensetzung nach Anspruch 1, welche einen Aziridin-quervernetzten Fußbodenlack entfernen kann.

14. Zusammensetzung nach Anspruch 1, ferner umfassend Silica oder Organosilica-anorganische Partikel mit einem mittleren Partikeldurchmesser von 0,005 bis 0,1 Mikrometern.

15. Verfahren zum Abziehen oder zur Tiefenreinigung eines quervernetzten Fußbodenlacks auf einem Fußboden, umfassend:
a) Auftragen einer Zusammensetzung nach den Ansprüchen 1 bis 14 auf den quervernetzten Fußbodenlack;
b) es der aufgetragenen Zusammensetzung zu erlauben, den Fußbodenlack wenigstens teilweise aufzuweichen; und
c) Entfernen der Zusammensetzung und des aufgeweichten Fußbodenlacks vom Fußboden.

## Revendications

1. Composition de décapant d'enduit de sol comprenant :
a) un alkyl alcool substitué par phényle ;
b) un solvant gonflant oxygéné autre que l'alkyl alcool substitué par phényle ;
c) de l'eau ;
d) suffisamment de coupleur pour que la composition ait une phase unique ;
e) suffisamment d'agent de saponification comprenant le produit de réaction d'un acide gras ou d'un ester gras avec un excès stoechiométrique d'un hydroxyde de métal alcalin ou d'hydroxyde d'ammonium pour que la composition ait un pH alcalin et comporte un résidu huileux réduit après décapage, en comparaison à une composition par ailleurs similaire qui ne contient pas l'agent de saponification.

2. Composition selon la revendication 1, dans laquelle l'alkyl alcool substitué par phényle comprend l'alcool benzylique.

3. Composition selon la revendication 1, dans laquelle l'alkyl alcool substitué par phényle comprend l'éthylène glycol phényl éther ou le propylène glycol phényl éther ou un mélange des deux.

4. Composition selon la revendication 1, comprenant plus de 5 % en poids et moins de 25 % en poids d'alkyl alcool substitué par phényle.

5. Composition selon la revendication 1, dans laquelle le solvant gonflant oxygéné comprend le propylène glycol monobutyl éther.

6. Composition selon la revendication 1, dans laquelle le solvant gonflant oxygéné comprend du dipropylène glycol diméthyl éther, de l'éthylène glycol monobutyl éther, du diéthylène glycol monobutyl éther, de la 1-méthyl-2-pyrrolidinone, de la 1-éthyl-2-pyrrolidinone ou l'un de leurs mélanges.

7. Composition selon la revendication 1, comprenant plus de 1 % en poids et moins de 10 % en poids de solvant gonflant oxygéné.

8. Composition selon la revendication 1, dans laquelle l'agent de saponification comprend le produit de réaction d'un acide gras avec un hydroxyde de métal alcalin ou de l'hydroxyde d'ammonium.

9. Composition selon la revendication 1, dans laquelle l'agent de saponification comprend le produit de réaction d'un ester gras avec un hydroxyde de métal alcalin ou de l'hydroxyde d'ammonium.

10. Composition selon la revendication 1, constituée de suffisamment d'hydroxyde de métal alcalin ou d'hydroxyde d'ammonium pour que la composition ait un pH de 8 à 11.

11. Composition selon la revendication 1, constituée de suffisamment d'hydroxyde de métal alcalin ou d'hydroxyde d'ammonium pour que la composition ait un pH de 9 à 11.

12. Composition selon la revendication 1, comprenant en outre 1 à 10 % en poids d'épaississant et 1 à 10 % en poids d'agent tensioactif.

13. Composition selon la revendication 1, qui peut éliminer un enduit de sol réticulé par aziridine.

14. Composition selon la revendication 1, comprenant en outre des particules inorganiques de silice ou d'organosilice ayant des diamètres moyens de particule de 0,005 à 0,1 micromètre.

15. Procédé de décapage ou de récurage profond d'un enduit de sol réticulé sur un sol comprenant :
a) l'application sur l'enduit de sol réticulé d'une composition selon les revendications 1 à 14 ;
b) le fait de permettre à la composition appliquée de ramollir au moins une partie de l'enduit de sol ; et
c) l'élimination de la composition et de l'enduit de sol ramolli du sol.
